# EUROPEAN PATENT APPLICATION

(11) **EP 4 764 412 A2**
(43) Date of publication of application: **24.06.2026**
(21) Application number: 25221722.9
(22) Date of filing: 09.12.2025
(51) Int. Cl.: G01C 21/20, G01C 21/34, G05D 1/00

(54) **METHOD AND APPARATUS FOR PATHFINDING DEVICES**

(30) Priority: 20.12.2024 FI 20246533
(71) Applicant: Nokia Solutions and Networks Oy, 02610 Espoo (FI)
(72) Inventor: SUVITIE, Arto Kristian, Helsinki (FI)
(74) Representative: Nokia EPO representatives

(57) **Abstract**

The present invention discloses an apparatus for use by a pathfinding device, comprising at least one processor; and at least one memory storing instructions that, when executed by the at least one processor, cause the apparatus at least to: obtain a first set of nodes of a polygon indicating a first Permitted-Moving - Zone, PMZ, wherein, the first PMZ is not overlapping with any other PMZs; determine a group of Non-permitted-Moving-Zones, NMZs, that lies within the first PMZ or intersects with the first PMZ as its relevant NMZs; and determine a visibility graph for the first PMZ based on its relevant NMZs.

## Description

### Field of the invention

Various example embodiments relate to pathfinding devices, specifically to building of visibility graphs.

### Background

Pathfinding is a challenging topic for robots like drones, autonomous vehicles, etc.

A common pathfinding approach is to define obstacles as 2D polygon; build a visibility graph for all polygon nodes by connecting each node to all others that are in direct line of sight; connect the desired start and destination points to the visibility graph, apply an algorithm like A* to find the shortest path from start to destination.

In order to create the visibility graph, it is necessary to first connect each node to all others nodes and then perform a line-of-sight (LOS) check on each connection. The connection that can pass the line-of-sight check may be kept on the visibility graph as a valid edge.

A line-of-sight check is a method to check whether it is possible to travel in a direct line from one node to another without intersecting with any polygon edges. This is done by comparing the given line with all line segments of relevant polygons, making it a relatively expensive operation. In a typical visibility graph generation solution, a line segment is compared against all defined polygons.

Establishing a visibility graph by performing LOS check on connections between all the nodes has the following issues: increasing the amount of polygon nodes considerably slows down visibility graph generation time; more polygon nodes result in more visibility graph edges, which consumes more application memory; more visibility graph edges slow down the pathfinding algorithm during application runtime. For example, defining areas with several thousands of obstacles causes the application to freeze for hours, making it unusable.

There is thus a need for an improved apparatus and method to solve the above-mentioned problems.

### Summary of the Invention

According to a first aspect of the invention, there is provided an apparatus for use by a pathfinding device, comprising: at least one processor; and at least one memory storing instructions that, when executed by the at least one processor, cause the apparatus at least to: obtain a first set of nodes of a polygon indicating a first Permitted-Moving - Zone, PMZ, wherein, the first PMZ is not overlapping with any other PMZs; determine a group of Non-permitted-Moving-Zones, NMZs, that lies within the first PMZ or intersects with the first PMZ as its relevant NMZs; and determine a visibility graph for the first PMZ based on its relevant NMZs.

According to a second aspect of the invention, there is provided a method comprising: obtain a first set of nodes of a polygon indicating a first Permitted-Moving - Zone, PMZ, wherein, the first PMZ is not overlapping with any other PMZs; determine a group of Non-permitted-Moving-Zones, NMZs, that lies within the first PMZ or intersects with the first PMZ as its relevant NMZs; and determine a visibility graph for the first PMZ based on its relevant NMZs.

According to a third aspect of the invention, there is provided a computer program comprising instructions, which when executed by an apparatus, cause the apparatus to perform at least the following: obtaining a first set of nodes of a polygon indicating a first Permitted-Moving - Zone, PMZ, wherein, the first PMZ is not overlapping with any other PMZs; determining a group of Non-permitted-Moving-Zones, NMZs, that lies within the first PMZ or intersects with the first PMZ as its relevant NMZs; and determining a visibility graph for the first PMZ based on its relevant NMZs.

According to a fourth aspect of the invention, there is provided an apparatus comprising means for: obtaining a first set of nodes of a polygon indicating a first Permitted-Moving - Zone, PMZ, wherein, the first PMZ is not overlapping with any other PMZs; determining a group of Non-permitted-Moving-Zones, NMZs, that lies within the first PMZ or intersects with the first PMZ as its relevant NMZs; and determining a visibility graph for the first PMZ based on its relevant NMZs.

According to a fifth aspect of the invention, there is provided a non-transitory computer readable medium comprising program instructions for causing an apparatus to perform at least the following: obtaining a first set of nodes of a polygon indicating a first Permitted-Moving - Zone, PMZ, wherein, the first PMZ is not overlapping with any other PMZs; determining a group of Non-permitted-Moving-Zones, NMZs, that lies within the first PMZ or intersects with the first PMZ as its relevant NMZs; and determining a visibility graph for the first PMZ based on its relevant NMZs.

According to a sixth aspect of the invention, there is provided a computer readable medium comprising program instructions for causing an apparatus to perform at least the following: obtaining a first set of nodes of a polygon indicating a first Permitted-Moving - Zone, PMZ, wherein, the first PMZ is not overlapping with any other PMZs; determining a group of Non-permitted-Moving-Zones, NMZs, that lies within the first PMZ or intersects with the first PMZ as its relevant NMZs; and determining a visibility graph for the first PMZ based on its relevant NMZs.

According to various embodiments, by considering only a group relevant of NMZs for each PMZ, the establishment of visibility graph can be simplified, and unnecessary calculation can be avoided. The establishment of visibility graph can be accelerated as less processing time is need. Starting from PMZs not overlapping with any other PMZs would simplify the pathfinding logic, as it is not necessary to determine whether a start point and be connected to a destination point through a plurality of overlapping PMZs. Furthermore, visibility graphs can be created separately for each PMZ for example in distinct areas in parallel. While establishing a visibility graph for respective PMZ, only its relevant NMZs need to be loaded for example to a memory. It is not necessary to load all the NMZs. Thus, less memory is needed. The loading work is significantly simplified and accelerated. The visibility graph can be established step by step for respective one of PMZs.

By merging polygons of same type (NMZ or PMZ) together, node connection logic is further simplified, as it is known for certain that a polygon edge is not going to be intersected by another polygon.

Moreover, unnecessary edges between nodes can be avoided, expensive line-of-sight checks are performed only on a reduced set of potential edges, the cost for generating the visibility graphs is significantly reduced.

### Brief description of the figures

For a more complete understanding of example embodiments of the present invention, reference is now made to the following descriptions taken in connection with the accompanying drawings in which:
Figure 1 shows a schematic diagram explaining the definition in various embodiments;
Figure 2a-2f show schematic diagrams elaborating the logic for connecting the nodes of a mixed polygon indicating an NMZ in a visibility graph according to various embodiments;
Figure 3a- 3f show schematic diagrams elaborating the logic for connecting the nodes of a first relevant NMZ to a second relevant NMZ corresponding to the first PMZ in a visibility graph according to various embodiments;
Figure 4 shows a block diagram depicting the apparatus 200 operating in accordance with an example embodiment;
Figure 5 shows a flow diagram of an example method incorporating aspects of the previously disclosed embodiments.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

A pathfinding device may be used to determine a path for a robot, such as drones, autonomous vehicles. Specifically, the pathfinding device may be used for example to establish a visibility graph for the application scenario and to implement various algorithms to find a path from a start point to a destination point based on the visibility graph.

The pathfinding device may be implemented locally on the robot. In another example, the pathfinding device may be implemented remotely for example on a cloud infrastructure and communicatively connected to a robot.

The apparatus 200 according to various embodiments are suitable for use by a pathfinding device. In one example, the apparatus 200 may be implemented as function blocks in the pathfinding device. In another example, the apparatus 200 may be implemented outside the pathfinding device and communicatively connected to the pathfinding device, for example as a USB stick or a plug-in.

Generally, moving areas for a robot may be defined using two types of polygons: permitted moving zones (PMZ) and non-permitted moving zones (NMZ). In one example, while defining flight areas for a drone, terms like permitted flying zone (PFZ) and no Fly zone (NFZ) may be used.

Specifically, PMZ may be indicated by a polygon that defines the boundaries of a permitted moving area. NMZ may be indicated by a polygon that is treated as an obstacle in pathfinding. All area outside of permitted zones is also implicitly considered as NMZ.

The PMZ and NMZ may be defined for example by users in various ways. For example, in one application scenario, user may wish to operate autonomous vehicles on various sites. User may define PMZ polygons for each site to mark the limits of the operating area; user may define NMZ polygons for obstacles (e.g. buildings); user may define NMZ polygons for otherwise forbidden areas (e.g. areas where people are present). In other example, autonomous flying vehicles are used with unmanned aircraft system traffic management (UTM), UTM system may provide PMZ and NMZ polygons based on flight area reservations. In one example, the PMZ and NMZ may be overlapped or intersects with other PMZs or NMZs.

The apparatus 200 is configured to obtain a first set of nodes of a polygon indicating a first PMZ, wherein, the first PMZ is not overlapping with any other PMZs.

Specifically, in one example, the first set of nodes may be ordered, for example using an index, according to a clockwise direction or a counterclockwise direction along the circumference of the first PMZ polygon. In another example, the connection order of the nodes may be additionally defined and provided to the apparatus 200. In the following, a polygon indicating a PMZ may be referred to as PMZ polygon. Similarly, a polygon indicating a NMZ may be referred to as NMZ polygon.

In one embodiment, the apparatus 200 may be further configured to merge a plurality of overlapping PMZs to form the first PMZ.

Specifically, if two PMZs overlap, they will be combined into one larger PMZ. Various methods may be used for this purpose, an example is given in https://angusj.com/clipper2/Docs/Units/Clipper/Functions/Union.htm.

The apparatus 200 is configured to determine a group of NMZs, that lies within the first PMZ or intersects with the first PMZ, as its relevant NMZs.

Specifically, bounding box check may be used to determine the relevant NMZs. In one example, if the bounding box of the NMZ and PMZ do not overlap, then the NMZ is outside PMZ. Wherein, bounding box is a rectangle formed by minimum and maximum latitudes and longitudes of the respective polygon. This check immediately discards the vast majority of irrelevant NMZs.

Further, the apparatus 200 may check if a node of a NMZ is inside the PMZ polygon. Various methods may be used for this purpose, an example is given in https://en.wikipedia.org/wiki/Point_in_polygon. If it is determined that one node of the NMZ is inside the PMZ polygon, the NMZ is either fully or at least partially inside PMZ. This check immediately discovers the vast majority of relevant NMZs.

Further, the apparatus 200 may check if any of the NMZ polygon edges intersects with any of the PMZ polygon edges. If an intersection is found, the NMZ intersects with PMZ. Otherwise, the NMZ is outside the PMZ. This last check is only needed for rare corner-case scenarios where all NMZ polygon vertices are outside PMZ, but an edge of the NMZ clips into the PMZ polygon.

The apparatus 200 is configured to determine a visibility graph for the first PMZ based on its relevant NMZs.

By considering only a group relevant of NMZs for each PMZ, the establishment of visibility graph can be simplified, and unnecessary calculation can be avoided. Starting from PMZs not overlapping with any other PMZs would simplify the pathfinding logic. Since it is by definition no longer possible to travel from a point in one PMZ to a point in another PMZ, as that would require crossing the zone boundary into NMZ. Therefore, each PFZ can have their own dedicated visibility graph. It is also not necessary to determine whether a start point and be connected to a destination point through a plurality of overlapping PMZs. Furthermore, visibility graphs can be created separately for each PMZ for example in distinct areas in parallel.

In one embodiment, the apparatus 200 may be configured to determine a visibility graph for a second PMZ in parallel.

Specifically, the apparatus 200 may be configured to obtain a fourth set of nodes of a polygon indicating a second PMZ, wherein, the second PMZ is not overlapping with any other PMZs; to determining a group of NMZs that lies within the second PMZ or intersects with the second PMZ as its relevant NMZs; and determine a visibility graph for the second PMZ based on its relevant NMZs.

In one embodiment, the relevant NMZ corresponding to respective PMZ is not overlapping with each other.

In one embodiment, the apparatus 200 may be further configured to merge a plurality of overlapping NMZs to form at least one of the relevant NMZs corresponding to respective PMZ.

Specifically, in one example, all overlapping zones of the same type may be merged together.

Since the PMZs or the NMZs by definition are not necessarily overlapped with zones of the same type, the step merging of the zones is optional for various embodiments.

In the following, details regarding the determining of the visibility graph will be elaborated.

Generally, the nodes of polygons indicating PMZ and NMZ are categorized into two categories: convex nodes and concave nodes.

Convex nodes are visually "sticking out" of NMZ towards the PMZ, and are relevant for pathfinding (i.e. can be used as a corner waypoint in a path).

Concave nodes are visually "sticking in" towards NMZ, and can never be used for pathfinding. For example, it is not possible to find a shortest path between any two points in PMZ such that the path would need to bend via a concave node.

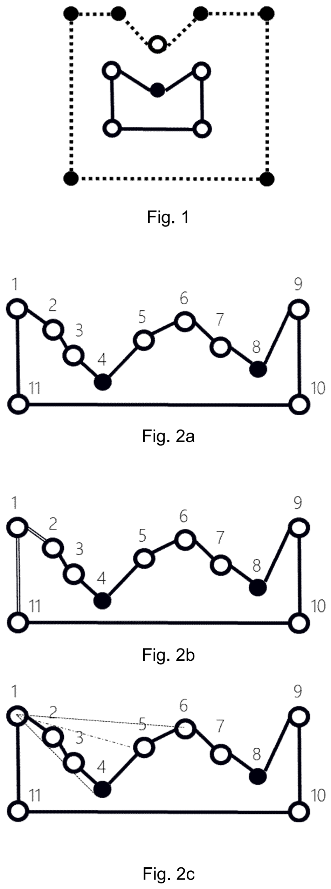

Figure 1 shows a schematic diagram explaining the definitions in various embodiments.

Specifically, in Figure 1, the dotted lines are used to represent a polygon indicating a PMZ, and the solid lines are used to represent a polygon indicating an NMZ. The solid circles are used to represent concave nodes, and the hollow circles are used to represent convex nodes.

As shown in Fig. 1, a single PMZ contains a single NMZ. The PMZ on the outside has a 1 convex node and 6 concave nodes. The NMZ in the center has 4 convex nodes and 1 concave node.

Various methods may be applied to determine whether a node is convex or concave, for example by calculating the cross product of the vectors formed by the node and its direct neighbours.

For creating edges on a visibility graph corresponding to a first PMZ, each relevant NMZ zone's own nodes may be first connected together. When connecting together nodes of a single polygon, the aim is to connect all nodes that can be used in pathfinding to all other nodes that can be reached directly without crossing NMZ zones.

In the simplest case of a NMZ zone containing only convex nodes, since the zones are not overlapping with any zones of the same type, there can be no obstacles between two consecutive nodes. Also, because the entire shape is convex, a node cannot be connected to any other node that is not its direct neighbour. In other words, for any node at index 'n', the node after next 'n+2' is going to be behind the corner of node 'n+1'.

As a result, such polygons can be connected by directly connecting each node to its immediate neighbours, without having to perform any line-of-sight checks.

For NMZ polygons containing a mixture of convex and concave points, more logic needs to be applied to determine valid connections. Such polygons may be referred to as mixed polygons below.

Figures 2a-2f show schematic diagrams elaborating the logic for connecting the nodes of a mixed polygon indicating an NMZ in a visibility graph according to various embodiments.

In one embodiment, the apparatus 200 may be further configured to obtain a second set of nodes of a polygon indicating a first relevant NMZ.

Similar as the first set of nodes, the second set of nodes may be ordered, for example using an index, according to a clockwise direction or a counterclockwise direction along the circumference of the first NMZ polygon. In another example, the connection order of the nodes may be additionally defined and provided to the apparatus 200.

Figure 2a shows an example of the second set of nodes of a polygon indicating a first relevant NMZ. The polygon indicating the first relevant NMZ here has 11 nodes N1, N2, ..., N11. Nodes N4 and N8 are concave, others are convex. The fist PMZ surrounding the first relevant NMZ is not shown in Figures 2a-2e.

In the following, examples will be elaborated taking N1 as a starting node for a connection in the visibility graph. Logic for attempting to connect the first convex node N1 to all other nodes from the second set of nodes will be described. A skilled person should understand the connection logic described herein is also applicable, when any other convex nodes from the second set of nodes is taken as the stating node.

The apparatus 200 is further configured to create edges on the visibility graph by connecting respective convex node from the second set of nodes with its neighbouring convex nodes as viable nodes corresponding to the respective node. Specifically, viable nodes corresponding to the first convex node are convex nodes within the first PMZ and are reachable from the first convex node N1 without crossing any relevant NMZs or the first PMZ edges. The edge between the first convex node and its corresponding viable node is a valid edge on the visibility graph. In other words, viable nodes are nodes in the final visibility graph.

Specifically, as shown by the double lines in Figure 2b, the first convex node N1 can be directly connected to its direct neighboring convex nodes N2 and N11 without any line-of-sight check. In another example, if the node N3 is take as the starting node, it would only be connected to its convex neighbouring node N2, because its other neighbouring node N4 is not convex. N4 is not a viable node.

The neighboring nodes N2 and N11 may be considered as viable nodes corresponding to the first convex node N1, and edges connecting the first convex node N1 to its neighboring nodes N2 and N11 are valid edges on the visibility graph.

In case the first NMZ is a mixed polygon comprising both convex nodes and concave nodes, potential valid edges may be created between the first convex node N1 and other nodes among the second set of nodes.

The apparatus 200 may be further configured to determine a set of potential viable nodes (N6, N9) corresponding to a first convex node (N1) from the second set of nodes, the potential viable nodes are convex nodes within the first PMZ and are reachable from the first convex node (N1) without crossing the first relevant NMZ.

Specifically, the potential viable nodes may comprise nodes from the first PMZ, and nodes from all the relevant NMZs corresponding to the first PMZ.

Various methods may be used to determine the potential viable nodes by eliminating nodes from the nodes of the first PMZ, and/or from nodes of the relevant NMZs corresponding to the first PMZ.

The apparatus 200 may be further configured to determine the set of potential viable nodes by eliminating a second type of nodes from the second set of nodes; wherein, the second type of node is a convex node neighbouring at least one of: a viable convex node, a potential viable node or another second type of node, and away from the first convex node.

Specifically, in the example shown in Figures 2a-2f, node N3 may not be a potential viable node corresponding to the first convex node N1, since N3 is a convex node neighbouring a viable convex node N2. The viable convex node N2 has two direct neighbouring nodes N1 and N3, and N3 is the one away from the first convex node N1. From geometric features, it is not possible to connect N1 to N3, because the line N1-N3 would lie within the NMZ. By eliminating the node N3 as a convex node neighbouring a viable convex node and away from the first convex node N1, the required calculation is reduced, it is not necessary to determine whether the line N1-N3 is within the first NMZ.

For the determining of the second type of nodes corresponding to the first convex node N1, the rest nodes from the second set of nodes may be swept in a clockwise direction. For example, the nodes N2, N3, N4 ... N11 may be checked sequentially one after another. In another example, the second set of nodes may be swept in a counterclockwise direction.

In one example, the nodes from the second set of nodes may be checked according to the sequence of the node index. In another example, the nodes from second set of nodes may be checked in other sequence indicated to the apparatus 200.

Alternatively or additionally, the apparatus 200 may be further configured to determine the set of potential viable nodes by eliminating concave nodes from the second set of nodes.

Specifically, reference is made to Figures 2a-2f, nodes N4 and N8 are concave nodes and cannot be a potential viable node. More specifically, node N1 cannot be connected to node N4 or N8, as they are concave. Thus, nodes N4 and N8 are not potential viable nodes corresponding to node N1.

In another example, if N4 were a convex node, it would be eliminated from the potential viable nodes for being a convex node neighbouring another second type of node N3, and away from the first convex node N1.

In the examples shown in Figures 2a-2f, it is no longer possible to rely on the earlier convex polygon specific node connection logic from node N4 onwards, because node N4 is a concave node. Namely, edges from N1 to subsequent convex nodes N5 cannot be directly dismissed as was done with nodes N3.

Alternatively or additionally, the apparatus 200 may be further configured to determine the set of potential viable nodes by eliminating a first type of nodes from the second set of nodes; wherein, a line between the first convex node (N1) and the first type of node (N5) lies within an angle formed by connecting the first convex node (N1) to respective neighboring nodes (N4, N6) of the first type of node (N5), or within an angle formed by connecting the first type of node to respective neighboring nodes of the first convex nodes.

Figure 2c shows a schematic diagram of determining a first type of node.

Specifically, as shown in Figure 2c, the dash-dotted line N1-N5 lies within the angle N6-N1-N4, shown by the dotted lines formed by the connecting N1-N4 and N1-N6. In other words, the line from node N1 to N5 is pointing towards the NMZ. As a result, if there is a robot at node N1 and a pathfinding target may be anywhere, the resulting shortest path would never go via node N5. In the following, term "angle check" may be used to refer the checking of whether a line between the first convex node and a concerned node lies within an angle formed by connecting the first convex node to respective neighboring nodes of the concerned node, or within an angle formed by connecting the concerned node to respective neighboring nodes of the first convex nodes may be referred to present disclosure.

Meanwhile, node N1 is not a potential viable node corresponding to node N5 either. For example, it is not possible to define any starting point such that the shortest path to N1 would go via N5, for example it may directly go to node N1 without going through node N5.

In another example, although not specifically shown in Figure 2c, but reference is made to the polygon shown in Figures 2a-2f, taking N2 as the starting node, N6 would be a first type of node corresponding to N2. Although the line N2-N6 does not lie within the angle N5-N2-N7, but it lies within the angle N1-N6-N3 formed by connecting N6 to respective neighboring nodes N1 and N3 of the node N2.

Thus, on one hand, N2 is not a potential viable node corresponding to N6. On the other hand, N6 is not a potential viable node corresponding to node N2 either. In one example, it is not possible to define any starting point such that the shortest path to N6 would go via N2.

That means, a bi- directional angle check is necessary for determining whether a connection between two nodes from same polygon (or different polygons, will be explained later) is a potential edge in the visibility graph.

For the determination of the first type of node, the second set of nodes may be checked in parallel. It is not necessary to check the nodes in a clockwise direction or a counterclockwise direction.

In the example shown in Figures 2a-2f, node N6 is not a concave node, a first type of node or a second type of node. Thus, node N6 cannot be eliminated, and may be determined as a potential viable node corresponding to the first convex node N1.

Then node N7 may be eliminated, as it is a second type of node, namely a convex node neighboring a potential viable convex node N6 and away from the first convex node N1.

Similarly, node N9 is not a concave node, a first type of node or a second type of node. Thus, node N9 may not be eliminated, and may be determined as a potential viable node corresponding to the first convex node N1. Then node N10 may be eliminated, as it is a second type of node, namely a convex node neighboring a potential viable convex node N9 and away from the first convex node N1.

Thus, the set of potential viable nodes corresponding to the first convex node N1 may be determined as comprising nodes N6 and N9.

The apparatus 200 may be further configured to determine a set of potential edges on the visibility graph by connecting the first convex node N1 to the set of potential viable nodes N6 and N9.

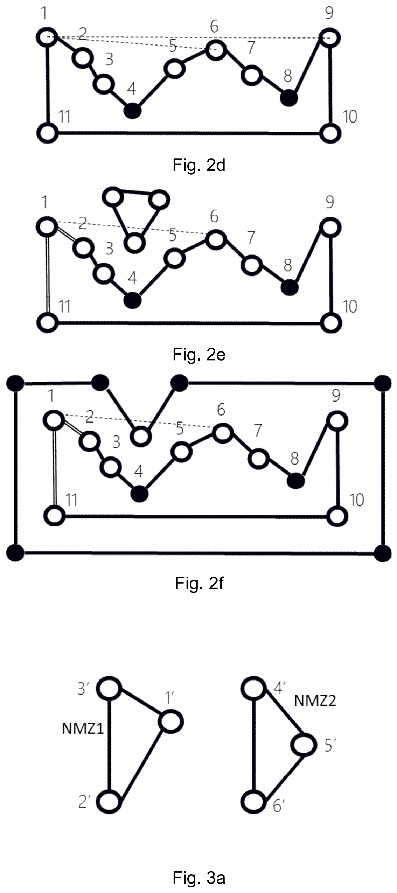

In Figure 2d, dash lines N1-N6 and N1-N9 show two potential edges on the visibility graph corresponding to the first convex node N1.

In one embodiment, the apparatus 200 may be further configured to perform a line-of-sight check on the set of potential edges.

The apparatus 200 may be further configured to determine an edge from the set of potential edges as a valid edge in the visibility graph based on a result of the line-of-sight check.

Specifically, considering the first NMZ alone, there seems to be no obstacle between node N1 and the node N6 or N9. However, in order to determine whether these potential edges N1-N6, and N1-N9 can be added to the visibility graph, a line-of-sight check must be performed between these points against the first PMZ polygon containing this first NMZ and all the other relevant NMZ polygons corresponding to the same first PMZ.

The reasoning for this is that there could be a NMZ or part of PMZ between nodes N1 and N6 preventing direct line-of-sight.

Figures 2e and 2f shows two examples explaining the necessity of the line-of-sight check.

In the example shown in Figure 2e, line N1-N6 may be blocked by a second NMZ. The second NMZ may be another relevant NMZ corresponding to the PMZ containing first NMZ.

In the example shown in Figure 2f, line N1-N6 may be blocked by the first PMZ surrounding the first NMZ.

Various methods may be implemented to carry out the LOS check.

Specifically, all overlapping polygons of same type (PMZ or NMZ) are first merged together, and then for each PMZ, only its relevant NMZs that are within the PMZ or partially intersect with the PMZ are considered for establishing the visibility graph. This means that for any LOS check, it is only necessary to consider the concerning PMZ polygon and its relevant NMZ polygons. In a typical case this means that the vast majority of polygons are excluded from calculations without having to perform any calculations or checks.

In one embodiment, the apparatus 200 may be further configured to determine a bounding box for respective potential path and a bounding box for the respective polygon indicating the first PMZ and its relevant NMZs, and to perform the line-of-sight check based on the polygon(s), the bounding box of which intersects with the bounding box of the respective potential path.

Specifically, a bounding box is a rectangle that covers a given shape (e.g. line or polygon), defined for example by the minimum and maximum X and Y coordinates (or latitude and longitude if working with World Geodetic System version 84, WGS84, coordinates).

When connecting nodes of a NMZ polygon to each other, the relevant polygons can be found by finding all polygons whose bounding box is within or intersects with the bounding box of the polygon being handled.

The bounding box filtering for polygons helps to efficiently remove unnecessary polygons from LOS check calculations.

To complete the visibility graph for the first NMZ polygon, the same connection logic may be applied to the remaining nodes.

To summarize the results of above: node N1 may be connected to 2 nodes, N2 and N11, directly without expensive line of sight checks based on convexity and adjacency (i.e. the nodes being direct neighbours). Node N1 was not connected to nodes N6 and N9 without expensive line of sight checks. Nodes N4 and N8 could be skipped due to being concave. Nodes N3, N7 and N10 could be skipped due to being the second type of nodes, namely convex nodes following another convex node that was already a potential viable node. Node N5 could be skipped as being first type of node, due to the angle checks as explained above. Node N1 may be potentially connected to 2 nodes, N6 and N9 by performing line-of-sight checks.

This is considerably faster than the default approach of taking each node and doing a full line-of-sight check to every other node. Only 2 of the 10 edge checks required line-of-sight checks. Since LOS check is an expensive calculation, reducing the number of edges requiring the LOS check can significantly accelerate the procedure of establishing visibility graph.

An example algorithm may be expressed as follows:
Considering a polygon with 'N' nodes, loop through all nodes of the polygon (from index 0 to 'N-1')
a. Consider the current node as 'n'
**b. If** 'n' is concave, skip to the next node
c. Loop through all remaining nodes after 'n' (from index 'n+1' to 'N-1')
   i. Consider this node as 'm'
   ii. **If** 'm' is concave, skip to the next node
   iii. Attempt to create a visibility graph edge from node 'n' to 'm'
      1. Check for the second type of node
         **If** all nodes from 'n+1' to 'm' have been convex, check whether 'm' is a direct neighbour of 'n', if 'm' is a direct neighbour of 'n', create a visibility graph edge directly, otherwise skip creating an edge.
      **2. If** there has been a concave node anywhere between 'n+1' to 'm', use the following logic
         a. Check for first type of node if node 'm' is a first type of node, skip to next node
         **b. If** node 'm' is not a first type of node, perform a LOS check from 'n' to 'm' as will described later below.

After each NMZ zone's own nodes are connected together, the respective relevant NMZ may be connected to the surrounding PMZ.

PMZ polygons differ from NMZ polygons in the sense that it is possible to create a PMZ polygon with only concave nodes, and it is not possible to create a PMZ polygon with only convex nodes.

A fully concave PMZ polygon is trivial, as no visibility graph edges connecting to the first set of nodes can be created. For a PMZ polygon containing convex nodes, the apparatus 200 may be further configured to determine the set of potential viable nodes by eliminating a fourth type of nodes from the first set of nodes; wherein, a line between the first convex node and the fourth type of node lies within an angle formed by connecting the first convex node to respective neighbouring nodes of the fourth type of node, or within an angle formed by connecting the fourth type of node to respective neighbouring nodes of the first convex nodes.

The apparatus 200 may be further configured to determine the set of potential viable nodes corresponding to the first convex node N1, N1' by eliminating concave nodes from the first set of nodes.

After each node of the NMZ and PMZ polygons has been connected internally to each other, the next step is to connect all of the NMZ polygons to each other.

Figure 3a- 3f show schematic diagrams elaborating the logic for connecting the nodes of a first relevant NMZ to a second relevant NMZ corresponding to the first PMZ in a visibility graph according to various embodiments.

Because the polygons are organized into PMZs containing NMZs, the connection logic only needs to consider the polygons related to the same PMZ. This speeds up the connection algorithm as connections to unreachable polygons do not need to be considered and it also allows for parallel processing for all PMZs simultaneously.

In the example shown in Figure 3a-3f, there are two NMZs. In this example, the two NMZs comprises convex nodes only. In another example, the NMZs may comprise concave nodes as well.

As shown in Figure 3a, the first NMZ NMZ1 comprises nodes labelled N1', N2' and N3' and the second NMZ NMZ2 comprises nodes labelled N4', N5', and N6'.

The apparatus 200 may be further configured to obtain a third set of nodes of a polygon indicating a second relevant NMZ, NMZ2.

In the following, example will be elaborated taking N1' as a starting node for a connection in the visibility graph, and N1' may also be referred to as the first convex node. Logic for attempting to connect the first convex node N1' to all other nodes from the third set of nodes will be described. A skilled person should understand the connection logic described herein is also applicable, when any other nodes from the second set of nodes is taken as the stating node.

The apparatus 200 may be further configured to determine the set of potential viable nodes corresponding to the first convex node N1' by eliminating a third type of nodes (N4' and N5) from the third set of nodes; wherein a line between the first convex node (N1') and the third type of node (N4, N5') lies within an angle formed by connecting the first convex node (N1') to respective neighbouring nodes (N4', N6') of the third type of node (N5'), or within an angle formed by connecting the third type of node (N4') to respective neighbouring nodes (N2', N3') of the first convex nodes (N1').

In one example, for the determining of the third type of nodes, the nodes from third set of nodes may be checked according to the sequence of the node index. For example, the third set of nodes may be checked in sequence of N4', N5' and N6'. In another example, the nodes from third set of nodes may be checked in any other sequence indicated to the apparatus 200.

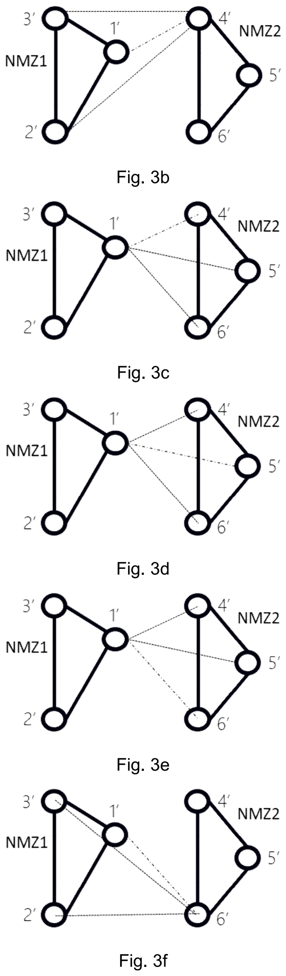

In Figures 3b and 3c, node N4' is checked first. The dash-dotted line N1'-N4' lies within the angle of N3'-N4'-N2' shown by the dotted lines formed by the connecting N4'-N2' and N4'-N3'.

When building the visibility graph, an edge between nodes N1' and N4' is not necessary. This is because the line from N4' is pointing straight towards the first NMZ NMZ1 and there is no valid target point from node N4' that would require the path to go via node N1'.

According to various embodiments, this angle logic must be checked in both directions, because the results from N1' to N4' are not the same as from N4' to N1'.

As shown in Figure 3c, the dash-dotted line N1'-N4' is not within the angle of N5'-N1'-N6' shown by the dotted lines formed by the connecting N1'-N5' and N1'-N6'.

The node N4' were to be considered as potential viable node corresponding to N1', if only the edge redundancy from N1' to N4' is checked in one direction. However, actually there is no path that would go via N1' to N4'. For example, if the start point is somewhere lower than N1' in figures 3a-3d, and the destination point is at node N4', the starting point may be directly connected to node N4' without going to N1' first.

Therefore, it is not sufficient to check only in one direction. Each potential visibility graph edge must be checked in both directions, and if either direction marks the line as redundant, then the line can be skipped from the visibility graph.

In this case node N1' to N4' does not seem redundant but N4' to N1' is, therefore there will be no edge between these nodes in the final visibility graph.

Therefore, on one hand, node N4' is not a potential viable node corresponding to N1'. On the other hand, node N1' is not a potential viable node corresponding to N4' either.

In Figure 3d, node N5' is checked. The dash-dotted line N1'-N5' lies within the angle of N4'-N1'-N6' shown by the dotted lines formed by the connecting N1'-N4' and N1'-N6'. Thus, node N5' is a third type of node corresponding to the first convex node N1', and may be eliminated from the potential viable nodes corresponding to N1'.

In one example, if a node is determined as a first type of node, a third type of node or a fourth type of node corresponding to the first convex node N1 or N1' based on angle check from one direction, the angle check from the other direction may be skipped.

In Figures 3e and 3f, node N6' is checked. In Figure 3e, the dash-dotted line N1'-N6' does not lie within the angle of N4'-N1'-N5' shown by the dotted lines formed by the connecting N1'-N4' and N1'-N5'. In Figure 3f, the dash-dotted line N1'-N6' is not within the angle N3'-N6-N2' formed by the connecting N6'-N2' and N6'-N3' either. The edge N1'-N6' is not redundant in either direction.

Thus, node N6' is not a third type of node corresponding to the first convex node N1', and may be determined as a potential viable node corresponding to N1'. The edge from N1' to N6' may be determined as a potential edge in the visibility graph and may require a line-of-sight check.

The necessity of the edge becomes obvious considering the situation of having the pathfinding start point at N6' and the end point near or at N3', in which case the resulting route would have to go via node '1'.

If the third set of nodes comprises concave nodes, the apparatus 200 may be further configured to determine the set of potential viable nodes corresponding to the first convex node N1' by eliminating concave nodes from the third set of nodes.

The apparatus 200 may be further configured to determine a path from a start point to a destination point based on the visibility graph, and to provide the determined path to a robot, thereby causing the robot to navigate using the determined path.

Specifically, in one example, the apparatus 200 may be configured to transmit the determined path to the pathfinding device and the pathfinding device may transmit the determined path to the robot. In another example, the apparatus may be configured to transmit the determined path directly to the robot, to cause the robot to navigate using the determined path.

In one embodiment, the apparatus 200 may be further configured to determine whether the start point and the destination point are located inside the first PMZ.

Specifically, in one example, the apparatus 200 may obtain a start and a destination point for the path for example from the pathfinding device or from a user.

The apparatus 200 may determine the first PMZ that surrounds the start point. If the start point is not within any of the PMZs, pathfinding is impossible.

The apparatus 200 may further verify that the same PMZ contains the destination point. If the destination point does lie within the first PMZ surrounding the start point, pathfinding is impossible.

The apparatus 200 may further verify that neither start nor destination are in any of the relevant NMZs corresponding to the first PMZ. There may be other apparatus or function blocks outside the apparatus 200 implementing a mechanism preventing the user from inputting any start or destination point within any NMZ or start point and destination point belonging to different PMZs.

The apparatus 200 may further check whether there is any NMZ between start and destination. If not, then pathfinding can immediately complete and return the direct path from start to destination.

The apparatus 200 may be further configured to connect the start point and the destination point to the visibility graph determined for the first PMZ, upon determining that the start point and the destination point are located inside the first PMZ.

Various methods may be applied to connect the start point and destination point to the visibility graph. In one example, angle check may be performed in one direction for connecting the start point and destination point to the determined visibility graph.

The apparatus 200 may further apply A* algorithm to solve the path from start to destination based on the determined visibility graph.

In other example, other algorithm may be applied for pathfinding based on the determined visibility graph.

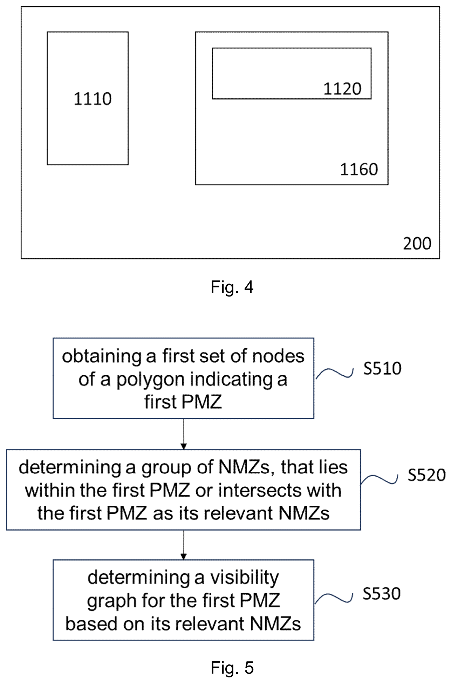

Figure 4 shows a block diagram depicting the apparatus 200 operating in accordance with an example embodiment. The apparatus 200 may be, for example, an electronic device such as a chip, chip-set, an electronic device or a pathfinding device. The apparatus 200 includes a processor 1110 and a memory 1160. In other examples, the apparatus 200 may comprise multiple processors.

In the example of Figure 4, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 200 as explained above. In other examples, the apparatus 200 may comprise more than one memory 1160 or different kinds of storage devices.

Computer program instructions 1120 for enabling implementations of example embodiments of the invention or a part of such computer program instructions may be loaded onto the apparatus 200 by the manufacturer of the apparatus 200, by a user of the apparatus 200, or by the apparatus 200 itself based on a download program, or the instructions can be pushed to the apparatus 200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200 comprises means, wherein the means comprises at least one processor 1110, at least one memory 1160 including computer program code 1120, the at least one memory 1160 and the computer program code 1120 configured to, with the at least one processor 1110, cause the performance of the apparatus 200.

Figure 5 illustrates a flow diagram of an example method incorporating aspects of the previously disclosed embodiments.

The method starts with step S510, obtaining a first set of nodes of a polygon indicating a first PMZ, wherein, the first PMZ is not overlapping with any other PMZs.

The method proceeds with step S520, determining a group of NMZs, that lies within the first PMZ or intersects with the first PMZ as its relevant NMZs.

The method proceeds with step S530, determining a visibility graph for the first PMZ based on its relevant NMZs.

A skilled person shall understand that the sequence of the method is not limited to the illustrated example. The method may be implemented in other sequence.

Without in any way limiting the scope, interpretation, or application of the claims appearing below, a technical effect of one or more of the example embodiments disclosed herein is that by considering only a group relevant of NMZs for each PMZ, the establishment of visibility graph can be simplified, and unnecessary calculation can be avoided. Starting from PMZs not overlapping with any other PMZs would simplify the pathfinding logic, as it is not necessary to determine whether a start point and be connected to a destination point through a plurality of overlapping PMZs. Furthermore, visibility graphs can be created separately for each PMZ for example in distinct areas in parallel.

By merging polygons of same type (NMZ or PMZ) together, node connection logic is further simplified, as it is known for certain that a polygon edge is not going to be intersected by another polygon.

Moreover, unnecessary edges between nodes can be avoided, expensive line-of-sight checks are performed only on a reduced set of potential edges, the cost for generating the visibility graphs is significantly reduced.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 4. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. An apparatus (200), comprising means for:
- obtaining a first set of nodes of a polygon indicating a first Permitted-Moving - Zone, PMZ, wherein, the first PMZ is not overlapping with any other PMZs;
- determining a group of Non-permitted-Moving-Zones, NMZs, that lies within the first PMZ or intersects with the first PMZ as its relevant NMZs;
- determining a visibility graph for the first PMZ based on its relevant NMZs;
- determining a path from a start point to a destination point based on the visibility graph; and
- providing the determined path to a robot, thereby causing the robot to navigate using the determined path.

2. The apparatus (200) according to claim 1, wherein the relevant NMZ is not overlapping with each other.

3. The apparatus (200) according to claim 1, further comprising means for:
- obtaining a second set of nodes of a polygon indicating a first relevant NMZ;
- creating edges on the visibility graph by connecting respective convex node from the second set of nodes with its neighboring convex nodes as viable nodes;
- determining a set of potential viable nodes (N6, N9) corresponding to a first convex node (N1) from the second set of nodes, the potential viable nodes are convex nodes within the first PMZ and are reachable from the first convex node without crossing the first relevant NMZ;
- determining a set of potential edges on the visibility graph by connecting the first convex node (N1) to the set of potential viable nodes (N6, N9);
- performing a line-of-sight check on the set of potential edges;
- determining an edge from the set of potential edges as a valid edge in the visibility graph based on a result of the line-of-sight check.

4. The apparatus (200) according to any of claims 1-3, further comprising means for:
- determining the set of potential viable nodes by eliminating a first type of nodes (N5) from the second set of nodes;
wherein, a line between the first convex node (N1) and the first type of node (N5) lies within an angle formed by connecting the first convex node (N1) to respective neighboring nodes (N4, N6) of the first type of node (N5), or within an angle formed by connecting the first type of node (N5) to respective neighboring nodes (N2, N11) of the first convex nodes (N1).

5. The apparatus (200) according to claim 3 or 4, further comprising means for:
- determining the set of potential viable nodes by eliminating a second type of nodes (N3, N7, N10) from the second set of nodes;
wherein, the second type of node is a convex node neighboring at least one of: a viable convex node, a potential viable node or another second type of node, and away from the first convex node.

6. The apparatus (200) according to any of claims 1-5, further comprising means for:
- obtaining a third set of nodes of a polygon indicating a second relevant NMZ;
- determining the set of potential viable nodes by eliminating a third type of nodes (N4', N5') from the third set of nodes;
wherein a line between the first convex node (N1') and the third type of node (N4', N5') lies within an angle formed by connecting the first convex node (N1') to respective neighboring nodes (N4', N6') of the third type of node (N5'), or within an angle formed by connecting the third type of node (N4') to respective neighboring nodes (N2', N3') of the first convex nodes (N1').

7. The apparatus (200) according to any of claims 1-6, further comprising means for:
- determining the set of potential viable nodes by eliminating a fourth type of nodes from the first set of nodes;
wherein, a line between the first convex node and the fourth type of node lies within an angle formed by connecting the first convex node to respective neighboring nodes of the fourth type of node, or within an **angle formed** by connecting the fourth type of node to respective neighboring nodes of the first convex nodes.

8. The apparatus (200) according to any of claims 1-7, further comprising means for:
- determining the set of potential viable nodes by eliminating concave nodes from at least one of:
∘ the first set of nodes,
∘ the second set of nodes, and
∘ the third set of nodes.

9. The apparatus (200) according to any of claims 1-8, further comprising means for:
- merging a plurality of overlapping NMZs to form at least one of the relevant NMZs, and/or
- merging a plurality of overlapping PMZs to form the first PMZ.

10. The apparatus (200) according to any of claims 1-9, further comprising means for:
- determining whether the start point and the destination point are located inside the first PMZ,
- connecting the start point and the destination point to the visibility graph determined for the first PMZ, upon determining that the start point and the destination point are located inside the first PMZ.

11. The apparatus (200) according to any of claims 1-10, further comprising means for:
- determining a bounding box for respective potential path and a bounding box for the respective polygon indicating the first PMZ and its relevant NMZs;
- performing the line-of-sight check based on the polygon, the bounding box of which is within or intersects with the bounding box of the respective potential path.

12. The apparatus (200) according to any of claims 1-11, further comprising means for:
- obtaining a fourth set of nodes of a polygon indicating a second PMZ, wherein, the second PMZ is not overlapping with any other PMZs;
- determining a group of NMZs that lies within the second PMZ or intersects with the second PMZ as its relevant NMZs;
- determining a visibility graph for the second PMZ based on its relevant NMZs.

13. A computer-implemented method, comprising:
- obtaining a first set of nodes of a polygon indicating a first Permitted-Moving - Zone, PMZ, wherein, the first PMZ is not overlapping with any other PMZs;
- determining a group of Non-permitted-Moving-Zones, NMZs, that lies within the first PMZ or intersects with the first PMZ as its relevant NMZs;
- determining a visibility graph for the first PMZ based on its relevant NMZs
- determining a path from a start point to a destination point based on the visibility graph; and
- providing the determined path to a robot, thereby causing the robot to navigate using the determined path.

14. The computer-implemented method according to claim 13, further comprising:
- obtaining a second set of nodes of a polygon indicating a first relevant NMZ;
- creating edges on the visibility graph by connecting respective convex node from the second set of nodes with its neighboring convex nodes as viable nodes;
- determining a set of potential viable nodes (N6, N9) corresponding to a first convex node (N1) from the second set of nodes, the potential viable nodes are convex nodes within the first PMZ and are reachable from the first convex node without crossing the first relevant NMZ;
- determining a set of potential edges on the visibility graph by connecting the first convex node (N1) to the set of potential viable nodes (N6, N9);
- performing a line-of-sight check on the set of potential edges;
- determining an edge from the set of potential edges as a valid edge in the visibility graph based on a result of the line-of-sight check.

15. A computer program comprising instructions, which when executed by an apparatus, cause the apparatus to perform at least the following:
- obtaining a first set of nodes of a polygon indicating a first Permitted-Moving - Zone, PMZ, wherein, the first PMZ is not overlapping with any other PMZs;
- determining a group of Non-permitted-Moving-Zones, NMZs, that lies within the first PMZ or intersects with the first PMZ as its relevant NMZs; and
- determining a visibility graph for the first PMZ based on its relevant NMZs
- determining a path from a start point to a destination point based on the visibility graph;
- providing the determined path to a robot, thereby causing the robot to navigate using the determined path.
